# EUROPÄISCHE PATENTSCHRIFT

(11) **EP 3 218 308 B1**
(45) Veröffentlichungstag und Bekanntmachung des Hinweises auf die Patenterteilung: **13.06.2018**
(21) Anmeldenummer: 15784937.3
(22) Anmeldetag: 14.10.2015
(51) Int. Cl.: C01G 37/00

(54) **VERFAHREN ZUR REDUKTION VON SECHSWERTIGEM CHROM IN OXIDISCHEN FESTSTOFFEN**
METHOD FOR REDUCING HEXAVALENT CHROMIUM IN OXIDIC SOLIDS
PROCÉDÉ DE RÉDUCTION DE CHROME HEXAVALENT DANS DES MATIÈRES SOLIDES OXYDÉES

(30) Priorität: 13.11.2014 EP 14193035
(43) Veröffentlichungstag der Anmeldung: 20.09.2017
(73) Patentinhaber: Lanxess Deutschland GmbH, 50569 Köln (DE)
(72) Erfinder: ORTMANN, Rainer, 50859 Köln (DE); FRIEDRICH, Holger, 47799 Krefeld (DE); BOLL, Matthias, 2940 Newcastle (ZA)
(86) Internationale Anmeldenummer: PCT/EP2015/073770
(87) Internationale Veröffentlichungsnummer: WO 2016/074878

(56) Entgegenhaltungen:
- EP-A1- 2 565 162
- WO-A1-2014/006196
- WANG ET AL: "A new method for the treatment of chromite ore processing residues", JOURNAL OF HAZARDOUS MATERIALS, ELSEVIER, AMSTERDAM, NL, Bd. 149, Nr. 2, 12. Oktober 2007 (2007-10-12), Seiten 440-444, XP022281720, ISSN: 0304-3894, DOI: 10.1016/J.JHAZMAT.2007.04.009
- S. SAMPATH ET AL: "Thermochemical studies in the sodium-chromium-oxygen system", THERMOCHIMICA ACTA, Bd. 159, 1. Januar 1990 (1990-01-01), Seiten 327-335, XP055182596, ISSN: 0040-6031, DOI: 10.1016/0040-6031(90)80118-I

## Beschreibung

Die Erfindung betrifft ein Verfahren zur Reduktion von sechswertigem Chrom, Cr(VI), in oxidischen Feststoffen. Insbesondere handelt es sich um die Reduktion des Cr(VI) in sogenannten Chromerzrückständen (im englischen auch als Chromite Ore Processing Residue (COPR) bezeichnet), welche als Nebenprodukte bei der Gewinnung von Chromchemikalien ausgehend von Chromit (Chromeisenstein) anfallen.

Von den verschiedenen Mineralien, die Chrom enthalten, sind nur die Chromspinelle, speziell der Chromit (Chromeisenstein, idealisiert: FeCr₂O₄), von wirtschaftlicher Bedeutung.

Natriumdichromat ist das mit Abstand wichtigste Ausgangsmaterial für die Herstellung von Chromchemikalien. Der einzige in großem Umfang industriell ausgeführte Prozess zur Gewinnung von Natriumdichromat, ausgehend von Chromit, besteht in dessen oxidierendem alkalischen Aufschluss mit Natriumcarbonat (Soda) oder Natriumhydroxid und Luft beziehungsweise Sauerstoff in Gegenwart eines Magerungsmittels bei Temperaturen von ca. 1100 °C. Auf diesen, in der Fachliteratur ausführlich beschriebenen Prozess, soll hier nur kurz eingegangen werden (siehe beispielsweise Ullmann's Encyclopedia of Industrial Chemistry, online Edition, Vol. A9, Seite 163-166, Wiley-VCH Verlag GmbH Co. KGaA, Weinheim 2012, published online 15. Juni 2000). Er umfasst im Wesentlichen drei Stufen:
- Oxidativer Aufschluss von Chromerz oder Chromerz-Konzentrat unter alkalischen Bedingungen
- Auslaugen des gebildeten Natriummonochromates und Abtrennung der Natriummonochromat-haltigen Lösung vom unlöslichen Rückstand (Chromerzrückstand) durch Fest-Flüssig-Separation
- Umwandlung des Natriummonochromates in Natriumdichromat durch Sauerstellung der Lösung.

Neben Chromit und Natrium-Alkalien, speziell Natriumcarbonat, werden der Ofenmischung noch Stoffe zugesetzt, die die Porosität des Ofeninhaltes während des Aufschlusses erhalten sollen (sogenannte Magerungsmittel). Die Porosität ist erforderlich, um eine ausreichende Oberfläche für die Reaktion mit Sauerstoff zu bilden. Die Chromausbeute bei der Verwendung von Chromit liegt je nach Zusammensetzung im Bereich von 74% bis 90% des im Chromerz vorhandenen Chroms.

Bei dem Herstellungsverfahren von Natriumdichromat kann ein Teil des Natriumcarbonats, das für den alkalischen Aufschluss nötig ist, durch Calciumcarbonat CaCO₃ oder Dolomit (CaMg(CO₃)₂) oder Calciumoxid CaO (lime) ersetzt werden. Solche Verfahren bezeichnet man - je nach Anteil an zugesetztem Calciumoxid - als High Lime-, No Lime- oder Low Lime-Verfahren. Die Nachteile beim Einsatz von Calciumoxid sind, dass pro hergestellter Tonne Natriumdichromat bis zu vier Tonnen giftigen Sondermülls entstehen, der aufgrund seines Calciumchromat-Anteils krebserregend ist. Deshalb ist es erstrebenswert, dem alkalischen Aufschluss möglichst wenig Calciumoxid beizufügen.

Die Abtrennung des gelösten Monochromates erfolgt nach Abkühlung und Laugung bei einem durch Zugabe von Säuren oder Dichromat-Lösung eingestellten pH-Wert mittels Fest-Flüssig-Separation, in der Regel über Filtration. Der unlösliche Rückstand wird mehrfach gelaugt, um den Gehalt an wasserlöslichem Cr(VI) zu verringern. Ein Teil des Rückstandes kann getrocknet werden, um dann als Magerungsmittel erneut der Ofenmischung zugeführt zu werden.

Der verbleibende Rückstand, der sogenannte Chromerzrückstand (Chromite Ore Processing Residue, COPR), enthält nach wie vor Cr(VI). Ein Teil des Cr(VI) liegt nach wie vor in wasserlöslicher Form als Natriummonochromat vor, allerdings macht eine Auslaugung bei niedrigen Cr(VI)-Gehalten wirtschaftlichen keinen Sinn mehr. Darüber hinaus liegt ein Teil des Cr(VI) auch in wasserunlöslicher oder wasserschwerlöslicher Form vor, der ebenfalls mit wirtschaftlich vertretbarem Aufwand nicht gewonnen werden kann.

Der Chromerzrückstand kann, je nachdem ob er für den oxidativen alkalischen Aufschluss von Chromerz das High Lime-, No Lime- oder Low Lime-Verfahren, verwendet wurde, in seiner Zusammensetzung, insbesondere dem CaO-Gehalt schwanken. Chromerzrückstände aus dem High Lime-Verfahren, weisen bis zu 35 Gew.-% CaO auf, solche aus dem No Lime-Verfahren gewöhnlich weniger als 5 Gew.-%, während die aus dem Low Lime-Verfahren von 5 bis 35 Gew.-% liegen.

Wenn der Chromerzrückstand in seiner ausgelaugten Form und ohne entsprechende zusätzliche Behandlung deponiert wird - wie es früher oftmals der Fall war - können noch über Jahrzehnte hinweg die schwerlöslichen Cr(VI)-Verbindungen langsam herausgelöst werden und somit Cr(VI) in die Umwelt gelangen. Deshalb sind das Grundwasser und das Erdreich um viele Chromerzrückstands-Deponien herum hochgradig mit Cr(VI) belastet.

Der Chromerzrückstand wird deshalb seit einigen Jahrzehnten in der Regel einem Reduktionsprozess unterworfen, um das noch vorhandene Cr(VI) in unbedenkliches Cr(III) zu überführen, bevor es schließlich deponiert wird. Dabei ist es wichtig, dass eine möglichst vollständige Reduktion des vorhandenen Cr(VI) erreicht wird, wobei auch das nicht an der Oberfläche des Rückstands befindliche, sondern von einer Siliciumdioxid- und/ oder Aluminiumoxid-Schicht eingeschlossene, schwer zugängliche und wasserunlösliche oder wasserschwerlösliche Cr(VI) miterfasst wird.

Dazu ist die Behandlung mit einem chemischen Reduktionsmittel, wie Fe(II)-Sulfat oder Schwefeldioxid, bekannt, wobei letzteres auch in Form von Hydrogensulfit-Ionen eingesetzt werden kann (siehe Ullmann's Encyclopedia of Industrial Chemistry, online Edition, Vol. A9, Seite 165, Wiley-VCH Verlag GmbH Co. KGaA, Weinheim 2012, published online 15. Juni 2000).

In jüngster Zeit ist auch der Einsatz von anderen Reduktionsmitteln oder Mischungen verschiedener Reduktionsmittel für die Behandlung von Chromerzrückständen vorgeschlagen worden. So schlagen Su und Ludwig (Environ Sci. Technol. 2005, 39, 6208-6216) beispielsweise eine Mischung aus Fe(II)-Sulfat und Natriumdithionit (Na₂S₂O₄) vor. Der Vorteil dieser FeSO₄/Na₂S₂O₄-Mischung liegt darin, dass durch Na₂S₂O₄ das Ausfällen von Fe(II)-Ionen verhindert wird und somit eine effektivere Reduktion des Cr(VI) über einen längeren Zeitraum hinweg gewährleistet sein soll. Dennoch konnte bei diesem Verfahren keine vollständige Reduktion des Cr(VI) im Chromerzrückstand erfolgen. Gemäß dem in USEPA (United States Environmental Protection Agency, USEPA) SW-846 Method 3060A beschriebenen alkalischen Aufschlussverfahren nimmt der Cr(VI)-Gehalt von 252 mg/kg auf lediglich 31.4 mg/kg ab.

Auch über den Einsatz von Calciumpolysulfid (CaS₅) beziehungsweise Mischungen aus Fe(II)-Sulfat und Calciumpolysulfid zur Reduktion des Cr(VI)-Gehaltes in Chromerzrückständen ist bereits in der Literatur berichtet worden. So beschreiben zum Beispiel Graham et al. (Science of the total Environment, 2006, 364(1-3), 32-44), Moon et al. (Science of the Total Environment, 2008, 399, 2-10) und Wazne et al. (Geosciences Journal, 2007, 11(2), 105-110) Versuche, bei denen Calciumpolysulfid als Reduktionsmittel eingesetzt wurde. In allen Fällen gelang es jedoch nicht, das Cr(VI) im Chromerzrückstand vollständig zu reduzieren.

Alle diese Verfahren beruhen darauf, dass für die Cr(VI)-Reduktion ein Reduktionsmittel zur Verfügung gestellt wird, welches über einen möglichst langen Zeitraum stabil und somit in der Lage ist, auch das Cr(VI), welches über einem sehr langen Zeitraum erst langsam aus dem Chromerzrückstand freigesetzt wird, zu reduzieren. Da sich jedoch die Freisetzung des Cr(VI) über Jahrzehnte hinziehen kann, darf bezweifelt werden, dass diese Vorschläge wirklich dazu geeignet sind, Cr(VI) im Chromerzrückstand vollständig zu reduzieren. So wird beispielsweise Fe(II) - auch bei sehr niedrigen pH-Werten - langsam an Luft zu Fe(III) oxidiert und steht dann nicht mehr als Reduktionsmittel zur Verfügung.

Die US 2010/0135876 A1 offenbart ein naßchemisches Verfahren zur Reduktion von Cr(VI) in Chromerzrückständen, bei dem Fe(II)-Ionen, welche als Reduktionsmittel wirken, auf der Oberfläche der COPR-Partikel in Form eines schwerlöslichen Niederschlages "fixiert" werden und somit auch in der Lage sein sollen über einen längeren Zeitraum wirksam zu sein. Bei dem offenbarten Verfahren wird zunächst das in der COPR-Matrix enthaltene Cr(VI) aufgelöst, indem eine ausreichende Menge Fe(II)-Sulfat zugesetzt wird. Durch die Fe(II)-Ionen erfolgt auch eine Reduktion des freigesetzten Cr(VI) zu Cr(III). Gleichzeitig fallen Fe(OH)₃ und Al(OH)₃ sowie CaSO₄ aus, was die Auflösung der COPR-Partikel begünstigt. Überschüssiges Fe(II) wird dann in Form eines schwerlöslichen Niederschlages auf der Oberfläche der COPR-Partikel "fixiert". Dies erfolgt vorzugsweise durch Zusatz eines Sulfides, beispielsweise Natriumsulfid (Na₂S), Natriumhydrogensulfid (NaHS) oder Calciumpolysulfid (CaSₓ), wodurch Eisen(II)-Sulfide ausgefällt werden oder durch Zusatz von Phosphorsäure, wodurch Fe(II)-Phosphate ausgefällt werden. Allerdings ist von FeS bekannt, dass es sich bereits in siedendem Wasser zersetzt. Unter den Bedingungen des alkalischen Aufschlussverfahrens gemäß USEPA SW-846 Method 3060A zersetzt sich FeS wieder. Die dabei frei werdenden Fe(II)- und Sulfid-Ionen können nun das noch in der COPR-Matrix gebundene Cr(VI), welches während des alkalischen Aufschlussverfahrens ebenfalls frei wird, reduzieren, sodass ein verfälschtes Ergebnis resultiert, da kein Cr(VI) mehr nachweisbar ist.

Zudem beschreibt die US 2010/0135876 A1 die Erscheinung, dass nach einer Trocknung der lediglich mit Fe(II)-Sulfat reduzierten COPR-Proben mit Hilfe des alkalischen Aufschlussverfahren wieder signifikante Mengen Cr(VI) (ca. 1100 ppm beziehungsweise 1500 ppm) nachgewiesen werden können. Sie führen dies entweder auf eine Rückoxidation von Cr(III) zu Cr(VI) mit Luftsauserstoff oder durch die Oxidation von Fe(II) zu Fe(III) mit Luftsauerstoff zurück. Die US 2010/0135876 A1 zieht jedoch nicht in Betracht, dass die Auflösung des in der COPR-Matrix gebundenen Cr(VI) unvollständig ist.

Cao und Zhang (J. Hazard. Materials B, 2006, B132, 213-219) beschreiben den Einsatz von nanoteiligen Eisenpartikeln (sogenanntes zero valent iron) als Reduktionsmittel. Nachteilig bei diesem Verfahren ist, dass die nanoteiligen Eisenpartikel (< 100 nm, spezifische Oberfläche ca. 35 m²/g) sehr aufwändig in ihrer Herstellung sind und deshalb allenfalls für Laborversuche geeignet sind, derzeit aber nicht für eine Anwendung im großtechnischen Maßstab in Frage kommen. Außerdem werden die nanoteiligen Eisenpartikel durch Luft und/oder Feuchtigkeit langsam oxidiert, so dass bezweifelt werden kann, dass dieses Material über Jahre hinweg in der Lage ist, sechswertiges Chrom in Chromerzrückständen zu reduzieren.

Inzwischen sind auch Anstrengungen unternommen worden, Cr(VI) auf biologischem Wege zu reduzieren. Stellvertretend sei hier nur auf Zhu et al. (World J Microbiol Biotechnol, 2008, 24, 991-996) verwiesen. Sie beschreiben die Verwendung von *Leucobacter* sp. CR1B Bakterien, welche von einer Chromerzrückstands-Deponie in Changsha (Volksrepublik China) isoliert werden konnten. Die Bakterien sind in der Lage gelöstes Cr(VI) zu reduzieren, wobei die Reduktion am besten bei einem neutralen pH-Wert erfolgt. Das Ausbringen und der Einsatz von Bakterien zur Cr(VI)-Reduktion in großem Umfang birgt den Nachteil, dass noch keinerlei Erkenntnisse über die langfristigen Auswirkungen dieser Bakterien im Ökosystem vorliegen. Langzeitstudien dazu stehen noch aus, um abschätzen zu können, ob dieser Weg überhaupt eine praktikable Alternative zur chemischen Reduktion von Cr(VI) in Chromerzrückständen darstellt.

Bereits seit längerer Zeit sind auch thermische Reduktionsverfahren für Chromerzrückstände bekannt. So wird beispielsweise in einigen japanischen Patenten die Verwendung von reduzierten Chromerzrückständen als Schwarz- und Braunpigmente bei der Herstellung von Keramiken (JP62 036061A und JP58-225158A) und Dachziegeln beschrieben (JP59-92968A, JP62 036061A), wobei zum Teil auch noch zusätzlich eine große Menge Koks als Reduktionsmittel der Keramikmasse zugesetzt wird. Beim Brennen laufen nach Angabe der Erfinder die folgenden Reaktionen ab, durch die Cr(VI) in Cr(III) überführt wird.

2 CaO*CrO₃ + 2 SiO₂ → 2 CaO*SiO₂ + Cr₂O₃ + 3/2 O₂ (1)

2 Na₂O*CrO₃ + 2 SiO₂ → 2 Na₂O*SiO₂ + Cr₂O₃ + 3/2 O₂ (2)

In den nach dem Brennen bei mindestens 1200 °C erhaltenen schokoladenfarbenen Keramiken ist offenbar kein Cr(VI) mehr nachweisbar, wobei aber die angewandte Analysenmethode sowie die Atmosphäre, unter der die Keramikkörper gebrannt werden, nicht offenbart werden. Es muss jedoch davon ausgegangen werden, dass unter reduzierenden Bedingungen gearbeitet wurde, weil bei Anwesenheit von Sauerstoff und Alkalimetall-Ionen bei entsprechend hoher Temperatur immer eine Rückoxidation von Cr(III) zu Natriumchromat erfolgt.

Wang et al. (Journal of Hazardous Materials, 2007, 149, 440-444) beschreiben die Reduktion des im Chromerzrückstand enthaltenen Cr(VI) mit Saccharose, löslicher Stärke oder Mehl durch Umsetzung unter Inertgas bei höheren Temperaturen. Dabei geben sie an, bei Temperaturen bis 600 °C eine vollständige Umsetzung von Cr(VI) zu Cr(III) zu erhalten. Der Chromerzrückstand, welcher ca. 34% CaO enthält, wird in den beschriebenen Laborversuchen im Mörser pulverisiert und dann mit den entsprechenden Reduktionsmitteln gemischt. Um einen vollständigen und gleichmäßigen Kontakt zwischen den Chromerzrückstands-Partikeln und dem Reduktionsmittel zu gewährleisten, werden diese in einer wässrigen Lösung oder Suspension zugesetzt. Die Reduktion wird in einem Röhrenofen unter Kohlendioxid-Atmosphäre durchgeführt. Es wurde eine systematische Variation der Reaktionszeit, Reaktionstemperatur und der Menge an zugesetztem Reduktionsmittel durchgeführt. Dabei zeigt sich, dass bei 600 °C Reaktionstemperatur ein Massenverhältnis von 2.0 : 1 (Reduktionsmittel: Cr(VI)) erforderlich ist, um bei 20 min Reaktionszeit eine vollständige Reduktion zu erhalten. Auf der Grundlage der beiden folgenden Reaktionsgleichungen - am Beispiel der Saccharose - zeigt sich, dass mit einem 1 Mol Saccharose 16 Mol Cr(VI) reduziert werden können, das heißt für die Reduktion von 1 g Cr(VI) werden theoretisch mindestens 0.41 g Saccharose benötigt:

16 CaCrO₄ + C₁₂H₂₂O₁₁ + 4 CO₂ → 8 Cr₂O₃ + 16 CaCO₃ + 11 H₂O (3)

16 Na₂CrO₄ + C₁₂H₂₂O₁₁ + 4 CO₂ → 8 Cr₂O₃ + 16 Na₂CO₃ + 11 H₂O (4)

Um eine vollständige Reduktion zu erhalten, muss aber anstelle des theoretischen Massenverhältnisses von 0.41 : 1 mindestens ein Massenverhältnis von 2.0 : 1 gewählt werden, d. h. 2.0 g Saccharose für 1 g Cr(VI). Wang et al. geben den Anteil an wasserlöslichem Cr(VI) in dem von ihnen eingesetzten Chromerzrückstand mit 1.07% an. Bei einem Massenverhältnis von 2.0 : 1 (Reduktionsmittel: Cr(VI)) bedeutet dies, dass mindestens 2.14 Gew.-% Reduktionsmittel zugesetzt werden müssen, um eine gemäß Analyseergebnis vollständige Reduktion zu erhalten.

Das von Wang et al. beschriebene Verfahren zur Cr(VI)-Reduktion weist mehrere Nachteile auf. Die erhaltenen Reaktionsprodukte wurden gemäß dem chinesischen Standard GB5086.2-1997 ausgelaugt und gemäß GB/T115555.4-1995 auf Cr(VI) analysiert. GB5086.2-1997 beschreibt lediglich eine Extraktion mit Wasser bei Raumtemperatur. Insofern werden nur die wasserlöslichen Cr(VI)-Anteile erfasst, während die schwer- oder unlöslichen Cr(VI)-haltigen Verbindungen mit diesem Extraktionsverfahren nicht erfasst werden. Das bedeutet, dass die von Wang dargelegten Ergebnisse keine Aussage über den tatsächlichen Erfolg seiner Reduktion von Cr(VI) zu Cr(III) zulassen. James et al. (Environ. Sci. Technol. 1995, 29, 2377-2381) haben die Extraktion von Cr(VI) mit verschiedenen Methoden untersucht und miteinander vergleichen. Dabei zeigt sich klar, dass der Aufschluss von Cr(VI) mit einer Natriumcarbonat/Natriumhydroxid-Mischung (0.28 M Na₂CO₃ und 0.5 M NaOH) bei 90-95°C über einen Zeitraum von 60 Minuten die effektivste Methode ist, alle Arten von Cr(VI) - egal ob wasserlöslich oder schwerlöslich - zu erfassen. Letztere Aufschlussmethode, wie sie in der USEPA (United States Environmental Protection Agency, USEPA) SW-846 Method 3060A beschrieben ist, gilt nach heutigem Kenntnisstand als das empfindlichste Extraktionsverfahren für Cr(VI) in Abfällen und setzt sich deshalb auch als analytisches Standardverfahren zum Aufschluss von Cr(VI) aus Chromerzrückständen immer mehr durch.

Wie eigene Untersuchungen zeigen, sind die von Wang et al. beschriebenen Reaktionsprodukte auch bei 600 °C Reaktionstemperatur und einem Massenverhältnis von 2.0 : 1 (Reduktionsmittel: Cr(VI)), sowie einer Reaktionszeit von 20 min nicht frei von Cr(VI), wenn sie gemäß USEPA SW-846 Method 3060A aufgeschlossen und analysiert werden. Es wird also nur eine vollständige Reduktion vorgetäuscht, weil ein unzureichendes Analyseverfahren angewandt wird. Anbei sei noch erwähnt, dass bei der Pyrolyse von Mehl, Stärke oder Saccharose eine extrem unangenehme Geruchsbelästigung auftritt, welches dieses Reduktionsverfahren zudem benachteiligt.

Zhang et al. (Chemosphere, 2009, 77(8), 1143-45) beschreiben die Reduktion von Cr(VI) im Chromerzrückstand durch Pyrolyse mit Reisstroh. In dieser Veröffentlichung wurden die Reaktionsprodukte gemäß USEPA SW-846 Method 3060A extrahiert. Der für die Versuche eingesetzte Chromerzrückstand enthielt 3400 ppm Cr(VI). Das Reisstroh : Chromerzrückstand-Verhältnis wurde im Bereich von 1 : 10 bis 1 : 2 variiert und die Reaktionstemperatur auf bis zu 600 °C erhöht. Unter keiner der beschriebenen Reaktionsbedingungen konnte ein Cr(VI)-freies Endprodukt erhalten werden. Es enthielt stets mindestens ca. 30 ppm Cr(VI). Vermutlich werden durch die Pyrolyse mit Reisstroh zwar die wasserlöslichen Cr(VI)-Bestandteile reduziert, aber die schwer- oder unlöslichen Cr(VI)-Bestandteile bleiben - zumindest teilweise - als sechswertiges Chrom vorhanden. Zudem werden durch das Stroh Schwefelverbindungen in den Prozess eingeschleppt. Unter den reduzierenden Bedingungen während der Reaktion entstehen Sulfide die im Endprodukt verbleiben. Wenn der reduzierte Chromerzrückstand in einer schwachen Säure suspendiert wird, tritt ein sehr unangenehmer Geruch nach Schwefelwasserstoff (H₂S) auf.

Zhang et al. (Bioresource Technology, 2009, 100(11), 2874-2877) beschreiben auch die Reduktion des im Chromerzrückstand enthaltenen Cr(VI) mit Klärschlämmen über eine Pyrolyse. Dabei wird der Klärschlamm im Verhältnis 1 : 10 mit Chromerzrückstand gemischt und anschließend einer Pyrolyse bei 600 °C unterworfen. Der Aufschluss des Cr(VI) erfolgt ebenfalls gemäß dem in USEPA SW-846 Method 3060A beschriebenen alkalischen Aufschlussverfahren. Auch bei diesem Verfahren kann der Cr(VI)-Gehalt von ursprünglich 3384 ppm für den unbehandelten Chromerzrückstand auf nur 24 ppm gesenkt werden. Die Pyrolyse von Chromerzrückstand mit Klärschlämmen, so wie von Zhang beschrieben, ist demnach kein geeignetes Verfahren, um Cr(VI)-freien Chromerzrückstand zu erhalten. Des Weiteren werden auch hier über die Klärschlämme Schwefelverbindungen in den Prozess eingeschleppt, die wie oben beschrieben den unangenehmen Geruch nach Schwefelwasserstoff (H₂S) entstehen lassen können.

Die US 2004/0086438 A1 offenbart ein Verfahren, durch welches das im Chromerzrückstand vorhandene Chrom und das Eisen gleichzeitig zurück gewonnen werden können. Dabei wird der Chromerzrückstand zuerst mit mindestens 20 Gew.-% eines Metallhydroxides, vorzugsweise Natrium- oder Kalium- oder Lithiumhydroxid, bei mindestens 350°C für mindestens 10 Minuten an Luft behandelt. Dem schließt sich eine saure Aufarbeitung an, die zu einem eisenreichen unlöslichen Rückstand führt. Weitere Nachteile sind die benötigten geschmolzenen Metallhydroxide, die sehr korrosiv und extrem schwierig zu handhaben sind. Die Übertragung dieses Verfahren in einen großtechnischen Maßstab bringt deshalb erhebliche Probleme mit sich. Entsprechend wird in fast allen offenbarten Beispielen lediglich 1 g Chromerzrückstand in kleinen Laborexperimenten umgesetzt. Lediglich in einem Beispiel wird ein 100 g-Ansatz in einem Drehrohrofen beschrieben, wobei allerdings nicht erwähnt wird, wie dieser betrieben wird. Ein weiterer gravierender Nachteil des Verfahrens ist, dass große Mengen Hydroxide und Säuren zugesetzt werden, so dass große Mengen an gelösten Salzen anfallen. Die Salzfracht in den Prozesswässern ist also sehr groß. Zudem ist das Verfahren auf eine große Menge von Calciumoxid angewiesen, da das Calcium zum Ausfällen von Sulfat als Calciumsulfat benötigt wird. Die Nachteile des Calciumoxid-Zusatzes wurden bereits erwähnt. EP2565162 offenbart ein Verfahren zur Reduktion von Cr(VI) zu Cr(III) durch Umsetzung von Natriummonochromat mit gasförmigem Ammoniak bei einer Temperatur von 200 bis 800°C und anschliessender Hydrolyse.

WO2014/006196, offenbart ein Verfahren zur Reduktion von sechswertigem Chrom in oxidischen Feststoffen, bei dem der oxidische Feststoff mit einer kohlenstoffhaltigen, im Bereich von 20 bis 100°C flüssigen Verbindung wie Glycerin oder Polyethylenglykol gemischt wird, welche als Reduktionsmittel dient.

Aufgabe der vorliegenden Erfindung war es, ein wirtschaftlich nutzbares Verfahren bereitzustellen, in dem das in einem oxidischen Feststoff enthaltene sechswertige Chrom soweit reduziert wird, dass im erhaltenen Endprodukt gemäß einem in dieser Anmeldung offenbarten, modifizierten alkalischen Aufschlussverfahren in Anlehnung an USEPA SW-846 Method 3060A ein Cr(VI)-Gehalt von <1000 ppm nachgewiesen werden kann, bevorzugt von kleiner als 100 ppm. Vorzugsweise sollten in dem Verfahren zur Reduktion des sechswertigen Chroms die durch die Verwendung der Reduktionsmittel des Standes der Technik entstehenden Nachteile wie beispielsweise erforderliche Abluftbehandlung, problematische Dosierung des Reduktionsmittels und erhöhte Kosten überwunden werden. Chrom(VI)-Verbindungen gelten gemäß REACH-Verordnung als besonders besorgniserregende Stoffe und sind auf der SVHC (Substances Of Very High Concern)-Liste aufgeführt. Produktgemische mit einem Anteil von größer/gleich 1000 ppm Chrom(VI) müssen daher entsprechend gekennzeichnet werden (Verordnung 1272/208/EC und 1999/45/EC).

Überraschenderweise konnte gefunden werden, dass gemäß dem in dieser Anmeldung offenbarten, modifizierten alkalischen Aufschlussverfahren in Anlehnung an USEPA SW-846 Method 3060A die Reduktion des Cr(VI) in oxidischen Feststoffen in ganz vorzüglicher Weise gelingt, auch wenn dem oxidischen Feststoff sowie der Atmosphäre enthaltend weniger als 0.1 Vol.-% eines oxidierenden Gases kein Reduktionsmittel zugesetzt wird.

Die Erfindung betrifft daher ein Verfahren zur Reduktion von sechswertigem Chrom in oxidischen Feststoffen, enthaltend die Schritte:
a) Erhitzen des oxidischen Feststoffes, enthaltend Cr(VI), in einer Atmosphäre enthaltend weniger als 0.1 Vol.-% eines oxidierenden Gases auf eine Temperatur von 600 bis 1400 °C, und
b) Abkühlen des nach Schritt a) erhaltenen Reaktionsproduktes in einer Atmosphäre enthaltend weniger als 0.1 Vol.-% eines oxidierenden Gases auf eine Temperatur von unter 100°C,
dadurch gekennzeichnet, dass in dem Verfahren dem oxidischen Feststoff sowie der Atmosphäre in Schritt a) und b) kein Reduktionsmittel zugesetzt wird.

Unter dem Begriff Reduktionsmittel wird im Rahmen der vorliegenden Erfindung wenigstens eine Verbindung verstanden, die mindestens unter den in Schritt a) und b) vorherrschenden Reaktionsbedingungen Cr(VI) zu Cr(III) reduziert.

Unter dem Begriff "kein Reduktionsmittel zugesetzt" wird im Rahmen der vorliegenden Erfindung verstanden, dass dem oxidischen Feststoff sowie der Atmosphäre enthaltend weniger als 0.1 Vol.-% eines oxidierenden Gases kein Reduktionsmittel zugesetzt wird. Besonders bevorzugt wird dem gesamten erfindungsgemäßen Verfahren kein Reduktionsmittel zugesetzt.

Der Nutzen aus dem erfindungsgemäßen Verfahren ist unter anderem, dass der erhaltene reduzierte oxidische Feststoff, insbesondere der reduzierte Chromerzrückstand, nicht mehr länger als Gefahrstoff betrachtet und deponiert werden muss, sondern als Wertstoff in eine neue Wertschöpfungskette eingebracht werden kann.

Durch das nicht erfolgende Zusetzen eines Reduktionsmittels in dem erfindungsgemäßen Verfahren ergeben sich zahlreiche Vorteile gegenüber den Reduktionsverfahren des Standes der Technik: zum einen ergibt sich ein deutlicher Kostenvorteil, da Reduktionsmittelkosten entfallen. Des Weiteren wird die Durchführung technisch deutlich vereinfacht durch den Entfall von Dosierung des Reduktionsmittels und durch den Wegfall der Verwendung eines Mischers, der den oxidischen Feststoff und das Reduktionsmittel mischt. Des Weiteren wird die Abgasbehandlung deutlich vereinfacht, da das Abgas keine zu behandelnden Rückstände organischer oder anorganischer Zersetzungsprodukte des Reduktionsmittels mehr enthält.

### Schritt a)

Für das erfindungsgemäße Verfahren können grundsätzlich alle Arten von oxidischen Feststoffen, enthaltend sechswertiges Chrom, eingesetzt werden.

Vorzugsweise werden Chromerzrückstände eingesetzt, die beim oxidativen alkalischen Aufschluss von Chromerzen, beispielsweise Chromit für die Herstellung von Natriummonochromat, anfallen.

Besonders bevorzugt wird in dem erfindungsgemäßen Verfahren ein Chromerzrückstand eingesetzt, der beim Herstellungsprozess von Natriummonochromat ausgehend von Chromit über einen oxidativen alkalischen Aufschluss mit Natriumcarbonat (No-Lime-Verfahren, CaO-Gehalt von < 5 Gew.-%) anfällt.

Bevorzugt werden auch sonstige Rückstände, Cr(VI) enthaltend, eingesetzt, wie sie beispielsweise aus der Auf- und Weiterverarbeitung von Natriummonochromat anfallen, wobei als sonstiger Rückstand, Cr(VI) enthaltend, besonders bevorzugt Calciumvanadat, das bei der Abtrennung von Vanadium aus der Monochromat-Lösung entsteht, eingesetzt wird. Es können auch Mischungen von oxidischen Feststoffen eingesetzt werden. Vorzugsweise enthält eine solche Mischung Chromerzrückstände und sonstige Rückstände, Cr(VI) enthaltend, wie sie beispielsweise aus der Auf- und Weiterverarbeitung von Natriummonochromat anfallen, wobei als sonstiger Rückstand, Cr(VI) enthaltend, besonders bevorzugt Calciumvanadat, das bei der Abtrennung von Vanadium aus der Monochromat-Lösung entsteht, eingesetzt wird.

Die oxidischen Feststoffe können weitere Metalloxide wie Chrom(III)-oxid (Cr₂O₃), Aluminiumoxid (Al₂O₃), Eisen(III)oxid (Fe₂O₃), Magnesiumoxid (MgO), Calciumoxid (CaO), Siliciumoxid (SiO₂), Vanadiumoxid (V₂O₅), Natriumoxid (Na₂O) und Natriummonochromat (Na₂CrO₄) enthalten.

Die oxidischen Feststoffe enthalten vorzugsweise einen Cr(VI)-Gehalt von bis zu 80000 ppm, besonders bevorzugt von bis zu 50000 ppm, ganz besonders bevorzugt von 1000 bis 15000 ppm, ermittelt gemäß dem modifizierten alkalischen Aufschlussverfahren in Anlehnung an USEPA SW-846 Method 3060A.

Bevorzugt liegt das Cr(VI) in den oxidischen Feststoffen als Natriummonochromat (Na₂CrO₄) vor.

Die oxidischen Feststoffe können als Wasser enthaltende Filterkuchen dem Schritt a) zugeführt werden. In einer bevorzugten Ausführungsform des erfindungsgemäßen Verfahrens werden sie jedoch in getrockneter Form eingesetzt. Besonders bevorzugt weisen sie einen Feuchtegehalt von max. 2.0 Gew.-%, ganz besonders bevorzugt von weniger als 1.0 Gew.-%, auf.

Der CaO-Gehalt des oxidischen Feststoffes beträgt bevorzugt weniger als 15 Gew.-%, ganz besonders bevorzugt weniger als 10 Gew.-%, insbesondere weniger als 5 Gew.-%.

Die Chromerzrückstände fallen im Produktionsprozess von Natriummonochromat nach Fest-Flüssig-Separation üblicherweise als feuchte Filterkuchen an, die so dem Schritt a) zugeführt werden können. Sonstige Rückstände, Cr(VI) enthaltend, werden bevorzugt mit einem Vanadium-Gehalt von 12 bis 15 Gew.-% eingesetzt. Mischungen aus Chromerzrückstand und Vanadat-haltigem sonstigen Rückstand enthalten bevorzugt bis zu 15000 ppm Cr(VI). Mischungen von oxidischen Feststoffen enthalten vorzugsweise mindestens 85 Gew.-% an Chromerzrückständen, besonders bevorzugt mindestens 90 Gew.-% an Chromerzrückständen.

Besonders bevorzugt weisen die oxidischen Feststoffe folgende Zusammensetzung auf:
- Chrom(III)-oxid (Cr₂O₃): 7 bis 13 Gew.-%, bevorzugt 7.5 bis 12.5 Gew.-%
- Aluminiumoxid (Al₂O₃): 10 bis 30 Gew.-%, bevorzugt 18 bis 24 Gew.-%
- Eisen(III)oxid (Fe₂O₃): 42 bis 50 Gew.-%, bevorzugt 42 bis 48 Gew.-%
- Magnesiumoxid (MgO): 9 bis 18 Gew.-%, bevorzugt 10 bis 17 Gew.-%
- Calciumoxid (CaO): < 10 Gew.-%, bevorzugt < 5 Gew.-%
- Siliciumoxid (SiO₂): 0 bis 3 Gew.-%, bevorzugt 1 bis 3 Gew.-%
- Vanadiumoxid (V₂O₅): < 1 Gew.-%, bevorzugt < 0.5 Gew.-%
- Natriumoxid (Na₂O): 0 bis 5 Gew.-%, bevorzugt 2 bis 5 Gew.-%
- Natriummonochromat (Na₂CrO₄): 0.3 bis 4.7 Gew.-%

Für das erfindungsgemäße Verfahren werden vorzugsweise oxidische Feststoffe eingesetzt, bei denen mindestens 90% der Partikel kleiner als 500 µm sind, ganz besonders bevorzugt kleiner als 300 µm. Dies kann - falls erforderlich - durch eine dem Schritt a) vorgeschaltete Siebung und/oder Mahlung erreicht werden.

Die Atmosphäre in Schritt a) enthält weniger als 0.1 Vol.-% eines oxidierenden Gases, wobei das oxidierende Gas bevorzugt Sauerstoff ist.

Bevorzugt enthält die Atmosphäre in Schritt a) weniger als 0.01 Vol.-% eines oxidierenden Gases.

Besonders bevorzugt ist die Atmosphäre in Schritt a) enthaltend weniger als 0.1 Vol.-%, bevorzugt weniger als 0.01 Vol.-%, eines oxidierenden Gases ausgewählt aus der Gruppe bestehend aus Inertgasatmosphäre und Vakuum.

In einer bevorzugten Ausführungsform ist die Atmosphäre in Schritt a) enthaltend weniger als 0.1 Vol.-%, besonders bevorzugt weniger als 0.01 Vol.-%, eines oxidierenden Gases, Inertgasatmosphäre.

Bevorzugt besteht die Inertgasatmosphäre zu wenigstens 90 Vol.-%, bevorzugt zu wenigstens 95 Vol.-%, ganz besonders bevorzugt zu wenigstens 99 Vol.-%, ganz ganz besonders bevorzugt zu wenigstens 99.5 Vol.-% aus einem oder mehreren Gasen ausgewählt aus der Gruppe bestehend aus Edelgasen, insbesondere aus Helium und Argon, Stickstoff und Kohlendioxid, bevorzugt ausgewählt aus der Gruppe bestehend aus Stickstoff und Kohlendioxid, ganz besonders bevorzugt Stickstoff.

Bevorzugt wird das Inertgas über den oxidischen Feststoff geleitet, besonders bevorzugt mittels eines Inertgasstroms, ganz besonders bevorzugt mittels eines Inertgasstroms von ca. einem Drittel des Reaktorvolumens/ min, ganz ganz besonders bevorzugt mittels eines Inertgasstroms von ca. einem Drittel des Reaktorvolumens/ min bei Normaldruck im Reaktor (ca. 1013 mbar).

In einer anderen bevorzugten Ausführungsform ist die Atmosphäre in Schritt a) enthaltend weniger als 0.1 Vol.-%, besonders bevorzugt weniger als 0.01 Vol.-%, eines oxidierenden Gases, Vakuum.

Unter dem Begriff Vakuum wird im Rahmen der vorliegenden Erfindung bevorzugt eine Atmosphäre mit einem Druck von weniger als 800 mbar, besonders bevorzugt von weniger als 650 mbar, ganz besonders bevorzugt von weniger als 450 mbar verstanden.

Der oxidische Feststoff wird in Schritt a) auf eine Temperatur von 600 °C bis 1400 °C, bevorzugt auf eine Temperatur von 850 °C bis 1200 °C, ganz besonders bevorzugt auf eine Temperatur von 950 °C bis 1150 °C erhitzt. Die Reaktionsdauer hängt von der verwendeten Temperatur ab und kann in einer dem Fachmann hinlänglich bekannten Weise einfach ermittelt werden. Bevorzugt beträgt die Reaktionsdauer fünf Minuten bis 24 Stunden, bevorzugt 1 bis 10 Stunden.

Das Erhitzen in Schritt a) erfolgt bevorzugt in einem Reaktor. Als Reaktor kommen alle Geräte in Frage, die die in Schritt a) erforderlichen Temperaturen sowie die in Schritt a) erforderliche Atmosphäre enthaltend weniger als 0.1 Vol.-% eines oxidierenden Gases gewährleisten können.

Das Erhitzen in Schritt a) kann in einem kontinuierlich arbeitenden oder diskontinuierlich arbeitenden Reaktor erfolgen. Bevorzugt erfolgt das Erhitzen in Schritt a) in einem kontinuierlich arbeitenden Reaktor.

Der Reaktor kann indirekt oder direkt beheizt sein, wobei bevorzugt ein indirekt beheizter Reaktor in Schritt a) eingesetzt wird. Besonders bevorzugt wird in Schritt a) ein mit gas- oder elektrisch indirekt beheizter Reaktor eingesetzt, ganz besonders bevorzugt ein elektrisch indirekt beheizter Reaktor.

Die Verwendung von indirekt beheizten Reaktoren hat außerdem den Vorteil, dass im Reaktionsraum selbst nur eine sehr geringe Gasströmung vorherrscht, wodurch kaum Staub ausgetragen wird.

Als Reaktoren in Schritt a) können beispielsweise Öfen verschiedenster Art verwendet werden. Dem Fachmann sind gängige Öfen wie beispielsweise Hordenofen, Muffelofen, Röhrenofen, Umluftofen und Retortenofen bekannt. Bevorzugt ist der in Schritt a) eingesetzte Ofen ein Röhrenofen, besonders bevorzugt ein waagerechter Röhrenofen, ganz besonders bevorzugt ein Zweizonendrehrohrofen.

Der oxidische Feststoff kann in Schritt a) in jeglichem gegenüber den in Schritt a) vorherrschenden Reaktionsbedingungen inerten Gefäß vorliegen. Bevorzugt liegt der oxidische Feststoff während des Erhitzens in einem Tiegel vor, besonders bevorzugt in einem Siliciumcarbidtiegel.

### Schritt b)

In Schritt b) erfolgt das Abkühlen des nach Schritt a) erhaltenen Reaktionsproduktes in einer Atmosphäre enthaltend weniger als 0.1 Vol.-% eines oxidierenden Gases auf eine Temperatur von unter 100°C.

Das Abkühlen in Schritt b) erfolgt bevorzugt in einem Reaktor. Als Reaktor kommen alle Geräte in Frage, die die in Schritt b) erforderlichen Temperaturen sowie die in Schritt b) erforderliche Atmosphäre enthaltend weniger als 0.1 Vol.-% eines oxidierenden Gases gewährleisten können.

Es gelten die Vorzugsbereiche für die Atmosphäre enthaltend weniger als 0.1 Vol.-% eines oxidierenden Gases aufgeführt unter Schritt a) sowie für die Reaktoren aufgeführt unter Schritt a) entsprechend für Schritt b).

Bevorzugt wird das nach Schritt a) erhaltene Reaktionsprodukt in Schritt b) auf eine Temperatur unter 40 °C, besonders bevorzugt unter 30 °C abgekühlt. So kann eine Rückoxidation von Cr(III) zu Cr(VI) wirksam vermieden werden, wie Untersuchungen gezeigt haben.

Das Abkühlen des nach Schritt a) erhaltenen Reaktionsproduktes kann in Schritt b) derart erfolgen, dass das nach Schritt a) erhaltene Reaktionsprodukt im Reaktor verbleibt und der Reaktor nach Abschalten der indirekten Beheizung mittels Inertgas abgekühlt wird.

Das Abkühlen des nach Schritt a) erhaltenen Reaktionsproduktes kann in Schritt b) auch derart erfolgen, dass das nach Schritt a) erhaltene Reaktionsprodukt im Reaktor verbleibt und im Vakuum abgekühlt wird.

Das Abkühlen des nach Schritt a) erhaltenen Reaktionsproduktes im Schritt b) kann auch in einem kontinuierlich arbeitenden oder diskontinuierlich arbeitenden Kühlaggregat erfolgen, wobei es vorzugsweise in einem kontinuierlich arbeitenden Kühlaggregat erfolgt. Als Beispiele für kontinuierlich arbeitende Kühlaggregate seien hier nur Festbettwärmetauscher, Schneckenwärmetauscher (Kühlschnecken) oder Kühltrommeln erwähnt.

Auch der Einsatz eines Drehrohrofens mit zwei Temperaturzonen ist für den kombinierten Einsatz in Schritt a) und b) denkbar. Das Abkühlen des nach Schritt a) erhaltenen Reaktionsproduktes im Schritt b) kann folglich auch in einem Zweizonendrehrohrofen erfolgen.

Sofern in Schritt a) ein diskontinuierlich arbeitender Reaktor eingesetzt wurde, kann die Abkühlung in Schritt b) auch in dem Reaktor selber erfolgen, was technisch besonders einfach zu realisieren ist.

Grundsätzlich ist es auch möglich, das aus dem Schritt a) erhaltene Reaktionsprodukt unter einer Schutzgasatmosphäre in Wasser abzuschrecken. Dies ermöglicht eine rasche und einfache Abkühlung. Nachteilig ist in diesem Fall jedoch, dass das Reaktionsprodukt als wässrige Suspension anfällt, die erst weiter aufgearbeitet werden muss, beispielsweise über eine Fest-/Flüssig-Trennung und anschließende Trocknung. Dies ist aus energetischer Sicht wenig sinnvoll, weil das aus dem Schritt a) erhaltene Reaktionsprodukt bereits trocken ist und so direkt weiter verarbeitet werden kann. Das nach dem Schritt b) erhaltene abgekühlte Reaktionsprodukt kann gegebenenfalls noch einer Siebung und/oder Mahlung unterzogen werden.

Der Cr(VI)-Gehalt des nach dem Schritt b) erhaltenen abgekühlten Reaktionsproduktes wird gemäß dem offenbarten modifizierten alkalischen Aufschlussverfahren ermittelt. Nach Schritt b) wird ein reduzierter oxidischer Feststoff erhalten. Bevorzugt wird ein reduzierter oxidischer Feststoff erhalten, der dadurch gekennzeichnet ist, dass er einen Anteil von weniger als 15 Gew.-% Calciumoxid enthält, besonders bevorzugt weniger als 10 Gew.-% Calciumoxid, ganz besonders bevorzugt weniger als 5 Gew.-% Calciumoxid.

Bevorzugt enthält der reduzierte oxidische Feststoff weniger als 1000 ppm Cr(VI), besonders bevorzugt weniger als 100 ppm Cr(VI), ganz besonders bevorzugt weniger als 50 ppm Cr(VI).

Anhand der nachfolgenden Beispiele wird die Erfindung näher erläutert, ohne dass dadurch eine Einschränkung der Erfindung bewirkt werden soll.

### Beispiele

### Bestimmung des Cr(VI)-Gehaltes

### Beschreibung der verwendeten Testmethoden:

### Modifiziertes alkalisches Aufschlussverfahren

Die Ermittlung des Cr(VI)-Gehaltes der als Ausgangsmaterialien eingesetzten oxidischen Feststoffe wie auch der erhaltenen Reaktionsprodukte wurde in Anlehnung an das in USEPA SW-846 Method 3060A beschriebene alkalische Aufschlussverfahren durchgeführt.

Für den Fall, dass der oxidische Feststoff mehr als 2 Gew.-% Wasser enthält, wird er bis zur Gewichtskonstanz bei 120 °C getrocknet und danach eingewogen. Im Gegensatz zu dem in USEPA SW-846 Method 3060A beschriebenen Verfahren werden allerdings nicht 2.4 g bis 2.6 g der zu untersuchenden Probe aufgeschlossen, sondern es werden zwischen 9.9g und 10.1g (Wägegenauigkeit 0.0001 g) des oxidischen Feststoffes quantitativ in einen Reaktionskolben mit Schutzgasanschluss überführt. Dann werden 50 ml der alkalischen Aufschlusslösung (hergestellt durch Auflösen von 20.0 g NaOH (0.5 M) und 29.7 g Na₂CO₃ (0.28 M) in 1.00 1 demineralisiertem Wasser), 2 ml einer Mg(NO₃)₂-Lösung (hergestellt durch Auflösen 60.0 g Mg(NO₃)₂*6 H₂O in 1.00 1 demineralisiertem Wasser) und 0.5 ml einer Pufferlösung mit pH = 7 zugesetzt. Die Suspension wird in einer Stickstoffatmosphäre unter Rühren bis zum Sieden erhitzt und eine Stunde lang unter Rückfluss erhitzt. Nach einer Stunde wird die Suspension unter Rühren auf Raumtemperatur abgekühlt. Anschließend wird an Luft filtriert und der Filterkuchen intensiv mit demineralisiertem Wasser gewaschen. Die bei der Filtration und Wäsche erhaltene Mutterlauge und Waschwässer werden in einem 500 ml-Maßkolben vereinigt, bis zum Eichstrich mit demineralisiertem Wasser aufgefüllt und wie unten beschrieben auf Cr(VI) analysiert. Im Gegensatz zu dem in USEPA SW-846 Method 3060A beschriebenen Verfahren wird also eine deutlich größere Probenmenge eingesetzt, aber schließlich wird der alkalische Extrakt im Maßkolben auf 500 ml aufgefüllt, anstatt auf 250 ml. Trotzdem resultiert aus dem oben beschriebenen Verfahren eine doppelt so hohe Cr(VI)-Konzentration in der Maßlösung, die für die Cr(VI)-Bestimmung über UV/VIS-Spektroskopie eingesetzt wird, im Vergleich zu dem in USEPA SW-846 Method 3060A beschriebenen Verfahren.

### UV/Vis-Spektroskopie zur Ermittlung des Chrom(VI)-Gehaltes

Dem aus dem alkalischen Aufschlussverfahren erhaltenen Maßkolben mit dem alkalischen Extrakt wird eine kleine Menge der klaren Lösung abgenommen und mit verdünnter Salzsäure auf einen pH-Wert von 7 eingestellt. Dabei entsteht in der Regel ein Niederschlag von Aluminium- und Siliciumhydroxiden, der abzentrifugiert wird. Das erhaltene klare Zentrifugat wird noch durch einen 0.45 µm-Spritzenfilter filtriert und sein Cr(VI)-Gehalt nach Einstellung des pH-Wertes als 1,5-Diphenylcarbazid-Komplex mittels UV/Vis-Spektroksopie bestimmt, wie es USEPA Method 218.7 beschrieben ist. Die gemessene Cr(VI)-Konzentration wird - sofern sie quantifiziert werden kann - unter Berücksichtigung der durch die pH-Einstellung mit der verdünnten Salzsäure entstandenen Verdünnung auf die Masse der ursprünglich eingesetzten oxidischen Feststoffmenge zurückgerechnet.

Die Bestimmung des Cr(VI)-Gehaltes erfolgte auf einem automatisierten UV/Vis-Spektrometer vom Typ Metrohm 844 UV/VIS Compact IC bei einer Wellenlänge von 539 nm. Bei diesem Gerät wird das Monochromat zunächst von anderen Anionen über eine Anionenaustauschersäule abgetrennt, bevor es in einem Nachsäulenreaktor mit 1,5-Diphenylcarbazid umgesetzt und spektrophotometrisch bestimmt wird. Bei dem verwendeten Gerät liegt die Cr(VI)-Bestimmungsgrenze bei 0.0128 mg/l Cr(VI). Unter Berücksichtigung von 10 g getrocknetem oxidischen Feststoff, welcher für das oben beschriebene alkalische Aufschlussverfahren eingesetzt wird, ergibt sich eine Bestimmungsgrenze von 0.64 mg Cr(VI) pro kg oxidischem Feststoff, was 640 ppb Cr(VI) entspricht.

### Beispiele 1-7

Anhand der nachfolgenden Beispiele wird die Erfindung näher erläutet, ohne dass dadurch eine Einschränkung der Erfindung bewirkt werden soll.

Für die nachfolgenden Beispiele wurde Chromerzrückstand aus dem industriellen Herstellungsprozess von Natriummonochromat ausgehend von Chromit über einen oxidativen alkalischen Aufschluss mit Natriumcarbonat (sogenanntes No Lime-Verfahren, CaO-Gehalt < 5 Gew.-%) eingesetzt. Der im Produktionsprozess von Natriummonochromat nach Fest-Flüssig-Separation in Form eines feuchten Filterkuchens angefallene Chromerzrückstand wurde lediglich getrocknet, aber nicht gesiebt oder gemahlen.

### Allgemeine Durchführung

Getrockneter Chromerzrückstand, dessen Cr(VI)-Gehalt nach dem oben beschriebenen modifizierten alkalischen Aufschlussverfahren ermittelt wurde, wurde in einen elektrisch indirekt beheizten waagerechten Röhrenrofen in Tiegeln erhitzt. Der Rohrdurchmesser betrug 70 mm bei einer Gesamtlänge von 1500 mm, wovon etwa 500 mm beheizt wurden. Die Tiegel befanden sich während der Versuche im beheizten Bereich.

Der getrocknete Chromerzrückstand wurde in den kalten Ofen eingebracht, beide Seiten gasdicht verschlossen und von einer Seite Stickstoff (>99.9990 Vol.-% Stickstoff) eingeleitet, der auf der gegenüberliegenden Seite über eine Auslassöffnung und über eine Tauchung in die Abluft geleitet wurde. Der Ofen wurde unter diesen Bedingungen unter einem Stickstoffgasstrom (ca. 2 L/min bei einem Ofenvolumen von ca. 6 L) auf die gewünschte Zieltemperatur aufgeheizt, die gewünschte Zeit bei dieser Temperatur belassen und danach wieder abgekühlt.

Nach Abkühlung wurde das schwarze reduzierte Chromerzrückstands-Reaktionsprodukt entnommen und gemäß dem oben beschriebenen alkalischen Aufschlussverfahren aufgearbeitet und der Cr(VI)-Gehalt im alkalischen Extrakt mittels UV/Vis-Spektroskopie bestimmt.

### Beispiel 1

Getrockneter Chromerzrückstand (Cr₂O₃: 8.7 %, Al₂O₃: 21.8%, Fe₂O₃: 46.5%, V₂O₅: 0.04 %, SiO₂: 1.3 %, MgO: 13.3%, CaO: 0.04 %, Na₂O: 2.9 %, alle Angaben in Gew.-%) mit einem Gehalt von 1409 ppm Cr(VI) (entspricht 0.43 Gew.-% Na₂CrO₄) wurde in Siliciumcarbidtiegel gefüllt und wie in der allgemeinen Durchführung beschrieben unter einer Stickstoffatmosphäre auf 900°C für zwei Stunden erhitzt und anschließend in einer Stickstoffatmosphäre auf unter 100°C abgekühlt. Der Cr(VI) Gehalt im Reaktionsprodukt wurde zu 31 ppm bestimmt.

### Beispiel 2

Getrockneter Chromerzrückstand (Cr₂O₃: 9.2 %, Al₂O₃: 19.8%, Fe₂O₃: 44.5%, V₂O₅: 0.04 %, SiO₂: 1.4 %, MgO: 14.6%, CaO: 0.04 %, Na₂O: 2.5 %, alle Angaben in Gew.-%) mit einem Gehalt von 1474 ppm Cr(VI) (entspricht 0.45 Gew.-% Na₂CrO₄) wurde in Siliciumcarbidtiegel gefüllt und wie in der allgemeinen Durchführung beschrieben unter einer Stickstoffatmosphäre auf 900°C für zwei Stunden erhitzt und anschließend in einer Stickstoffatmosphäre auf unter 100°C abgekühlt. Der Cr(VI) Gehalt im Reaktionsprodukt wurde zu 40 ppm bestimmt.

### Beispiel 3

Getrockneter Chromerzrückstand (Cr₂O₃: 9.2 %, Al₂O₃: 19.8%, Fe₂O₃: 44.5%, V₂O₅: 0.04 %, SiO₂: 1.4 %, MgO: 14.6%, CaO: 0.04 %, Na₂O: 2.5 %, alle Angaben in Gew.-%) mit einem Gehalt von 1474 ppm Cr(VI) (entspricht 0.45 Gew.-% Na₂CrO₄) wurde in Siliciumcarbidtiegel gefüllt und wie in der allgemeinen Durchführung beschrieben unter einer Stickstoffatmosphäre auf 1100°C für vier Stunden erhitzt und anschließend in einer Stickstoffatmosphäre auf unter 100°C abgekühlt. Der Cr(VI) Gehalt im Reaktionsprodukt wurde zu < 0.64 ppm bestimmt.

### Beispiel 4

Getrockneter Chromerzrückstand (Cr₂O₃: 8.9 %, Al₂O₃: 22.3%, Fe₂O₃: 43.8%, V₂O₅: 0.04 %, SiO₂: 1.5 %, MgO: 14.3%, CaO: 0.04 %, Na₂O: 3.5 %, alle Angaben in Gew.-%) mit einem Gehalt von 7995 ppm Cr(VI) (entspricht 2.49 Gew.-% Na₂CrO₄) wurde in Siliciumcarbidtiegel gefüllt und wie in der allgemeinen Durchführung beschrieben unter einer Stickstoffatmosphäre auf 1100°C für vier Stunden erhitzt und anschließend in einer Stickstoffatmosphäre unter 100°C abgekühlt. Der Cr(VI) Gehalt im Reaktionsprodukt wurde zu < 0.64 ppm bestimmt.

### Beispiel 5

Getrockneter Chromerzrückstand (Cr₂O₃: 8.9 %, Al₂O₃: 22.3%, Fe₂O₃: 43.8%, V₂O₅: 0.04 %, SiO₂: 1.5 %, MgO: 14.3%, CaO: 0.04 %, Na₂O: 3.5 %, alle Angaben in Gew.-%) mit einem Gehalt von 7995 ppm Cr(VI)) (entspricht 2.49 Gew.-% Na₂CrO₄) wurde in Siliciumcarbidtiegel gefüllt und wie in der allgemeinen Durchführung beschrieben unter einer Stickstoffatmosphäre auf 1000°C für vier Stunden erhitzt und anschließend in einer Stickstoffatmosphäre unter 100°C abgekühlt. Der Cr(VI) Gehalt im Reaktionsprodukt wurde zu 27 ppm bestimmt.

### Beispiel 6

Getrockneter Chromerzrückstand (Cr₂O₃: 8.9 %, Al₂O₃: 22.3%, Fe₂O₃: 43.8%, V₂O₅: 0.04 %, SiO₂: 1.5 %, MgO: 14.3%, CaO: 0.04 %, Na₂O: 3.5 %, alle Angaben in Gew.-%) mit einem Gehalt von 7995 ppm Cr(VI) (entspricht 2.49 Gew.-% Na₂CrO₄) wurde in Siliciumcarbidtiegel gefüllt und wie in der allgemeinen Durchführung beschrieben unter einer Stickstoffatmosphäre auf 1100°C für zwei Stunden erhitzt und anschließend in einer Stickstoffatmosphäre unter 100°C abgekühlt. Der Cr(VI) Gehalt im Reaktionsprodukt wurde zu < 0.64 ppm bestimmt.

### Beispiel 7

Getrockneter Chromerzrückstand (Cr₂O₃: 8.3 %, Al₂O₃: 22.01%, Fe₂O₃: 45.7%, V₂O₅: 0.07%, SiO₂: 1.4%, MgO: 10.4%, CaO: 0.06%, Na₂O: 3.4 %, alle Angaben in Gew.-%) mit einem Gehalt von 5714 ppm Cr(VI) (entspricht 1.8 Gew.-% Na₂CrO₄) wurde in Siliciumcarbidtiegel gefüllt und wurde, abweichend von der allgemeinen Durchführung wie oben beschrieben, in einem Vakuum von 400 mbar auf 1000°C für zwei Stunden erhitzt und anschließend unter gleichem Vakuum auf unter 100°C abgekühlt. Der Cr(VI) Gehalt im Reaktionsprodukt wurde zu < 0.64 ppm bestimmt.

## Patentansprüche

1. Verfahren zur Reduktion von sechswertigem Chrom in oxidischen Feststoffen, enthaltend die Schritte:
a) Erhitzen des oxidischen Feststoffes, enthaltend Cr(VI), in einer Atmosphäre enthaltend weniger als 0.1 Vol.-% eines oxidierenden Gases auf eine Temperatur von 600 bis 1400 °C, und
b) Abkühlen des nach Schritt a) erhaltenen Reaktionsproduktes in einer Atmosphäre enthaltend weniger als 0.1 Vol.-% eines oxidierenden Gases auf eine Temperatur von unter 100°C,
**dadurch gekennzeichnet, dass** in dem Verfahren dem oxidischen Feststoff sowie der Atmosphäre in Schritt a) und b) kein Reduktionsmittel zugesetzt wird.

2. Verfahren gemäß Anspruch 1, **dadurch gekennzeichnet, dass** der eingesetzte oxidische Feststoff ein Chromerzrückstand ist.

3. Verfahren gemäß einem der Ansprüche 1 oder 2, **dadurch gekennzeichnet, dass** der eingesetzte oxidische Feststoff bis zu 80000 ppm, bevorzugt bis zu 50000 ppm, besonders bevorzugt 1000 bis 15000 ppm Cr(VI) aufweist.

4. Verfahren gemäß einem der Ansprüche 1 bis 3, **dadurch gekennzeichnet, dass** das Cr(VI) in dem oxidischen Feststoff als Natriummonochromat (Na₂CrO₄) vorliegt.

5. Verfahren gemäß einem der Ansprüche 1 bis 4, **dadurch gekennzeichnet, dass** der oxidische Feststoff folgende Zusammensetzung aufweist:
• Chrom(III)-oxid (Cr₂O₃): 7 bis 13 Gew.-%, bevorzugt 7.5 bis 12.5 Gew.-%
• Aluminiumoxid (Al₂O₃): 10 bis 30 Gew.-%, bevorzugt 18 bis 24 Gew.-%
• Eisen(III)oxid (Fe₂O₃): 42 bis 50 Gew.-%, bevorzugt 42 bis 48 Gew.-%
• Magnesiumoxid (MgO): 9 bis 18 Gew.-%, bevorzugt 10 bis 17 Gew.-%
• Calciumoxid (CaO): < 10 Gew.-%, bevorzugt < 5 Gew.-%
• Siliciumoxid (SiO₂): 0 bis 3 Gew.-%, bevorzugt 1 bis 3 Gew.-%
• Vanadiumoxid (V₂O₅): < 1 Gew.-%, bevorzugt < 0.5 Gew.-%
• Natriumoxid (Na₂O): 0 bis 5 Gew.-%, bevorzugt 2 bis 5 Gew.-%
• Natriummonochromat (Na₂CrO₄): 0.3 bis 4.7 Gew.-%

6. Verfahren gemäß einem der Ansprüche 1 bis 5, **dadurch gekennzeichnet, dass** mindestens 90% der Partikel des oxidischen Feststoffs kleiner als 500 µm sind, besonders bevorzugt kleiner als 300 µm.

7. Verfahren gemäß einem der Ansprüche 1 bis 6, **dadurch gekennzeichnet, dass** die Atmosphäre in Schritt a) enthaltend weniger als 0.1 Vol.-%, bevorzugt weniger als 0.01 Vol.-%, eines oxidierenden Gases, ausgewählt ist aus der Gruppe bestehend aus Inertgasatmosphäre und Vakuum.

8. Verfahren gemäß Anspruch 7, **dadurch gekennzeichnet, dass** die Atmosphäre in Schritt a) enthaltend weniger als 0.1 Vol.-%, bevorzugt weniger als 0.01 Vol.-%, eines oxidierenden Gases, Inertgasatmosphäre ist und zu wenigstens 90 Vol.-%, bevorzugt zu wenigstens 95 Vol.-%, besonders bevorzugt zu wenigstens 99 Vol.-%, ganz besonders bevorzugt zu wenigstens 99.9 Vol.-%, aus einem oder mehreren Gasen ausgewählt aus der Gruppe bestehend aus Edelgasen, insbesondere aus Helium und Argon, Stickstoff und Kohlendioxid, bevorzugt ausgewählt aus der Gruppe bestehend aus Stickstoff und Kohlendioxid, ganz besonders bevorzugt Stickstoff, besteht.

9. Verfahren gemäß Anspruch 7, **dadurch gekennzeichnet, dass** die Atmosphäre in Schritt a) enthaltend weniger als 0.1 Vol.-%, bevorzugt weniger als 0.01 Vol.-%, eines oxidierenden Gases, Vakuum ist, bevorzugt eine Atmosphäre mit einem Druck von weniger als 800 mbar, besonders bevorzugt weniger als 650 mbar, ganz besonders bevorzugt von weniger als 450 mbar.

10. Verfahren gemäß einem der Ansprüche 1 bis 9, **dadurch gekennzeichnet, dass** der oxidische Feststoff in Schritt a) auf eine Temperatur von 850 °C bis 1200 °C, bevorzugt auf eine Temperatur von 950 °C bis 1150 °C erhitzt wird.

11. Verfahren gemäß einem der Ansprüche 1 bis 10, **dadurch gekennzeichnet, dass** das Erhitzen in Schritt a) in einem kontinuierlich arbeitenden oder diskontinuierlich arbeitenden Reaktor erfolgt, bevorzugt in einem kontinuierlich arbeitenden Reaktor.

12. Verfahren gemäß Anspruch 11, **dadurch gekennzeichnet, dass** der Reaktor ein mit gas- oder elektrisch indirekt beheizter Reaktor ist, bevorzugt ein elektrisch indirekt beheizter Reaktor.

13. Verfahren gemäß einem der Ansprüche 11 oder 12, **dadurch gekennzeichnet, dass** der Reaktor ein elektrisch indirekt beheizter waagerechter Röhrenofen ist, bevorzugt ein Zweizonendrehrohrofen.

14. Verfahren gemäß einem der Ansprüche 1 bis 13, **dadurch gekennzeichnet, dass** das nach Schritt a) erhaltene Reaktionsprodukt in Schritt b) auf eine Temperatur unter 40 °C, besonders bevorzugt unter 30 °C abgekühlt wird.

15. Verfahren gemäß einem der Ansprüche 1 bis 14, **dadurch gekennzeichnet, dass** das nach Schritt a) erhaltene Reaktionsprodukt in Schritt b) im Reaktor verbleibt und der Reaktor nach Abschalten der indirekten Beheizung mittels Inertgas abgekühlt wird.

## Claims

1. Process for reducing hexavalent chromium in oxidic solids, which comprises the steps:
a) heating of the oxidic solid containing Cr(VI) to a temperature of from 600 to 1400°C in an atmosphere containing less than 0.1% by volume of an oxidizing gas and
b) cooling of the reaction product obtained after step a) to a temperature below 100°C in an atmosphere containing less than 0.1% by volume of an oxidizing gas,
**characterized in that** no reducing agent is added to the oxidic solid or to the atmosphere in step a) and b) in the process.

2. Process according to Claim 1, **characterized in that** the oxidic solid used is a chrome ore residue.

3. Process according to either Claim 1 or 2, **characterized in that** the oxidic solid used comprises up to 80 000 ppm, preferably up to 50 000 ppm, particularly preferably from 1000 to 15 000 ppm, of Cr(VI).

4. Process according to any of Claims 1 to 3, **characterized in that** the Cr(VI) in the oxidic solid is present as sodium monochromate (Na₂CrO₄).

5. Process according to any of Claims 1 to 4, **characterized in that** the oxidic solid has the following composition:
• chromium (III) oxide (Cr₂O₃) : from 7 to 13% by weight, preferably from 7.5 to 12.5% by weight
• aluminium oxide (Al₂O₃) : from 10 to 30% by weight, preferably from 18 to 24% by weight
• iron(III) oxide (Fe₂O₃): from 42 to 50% by weight, preferably from 42 to 48% by weight
• magnesium oxide (MgO): from 9 to 18% by weight, preferably from 10 to 17% by weight
• calcium oxide (CaO) : < 10% by weight, preferably < 5% by weight
• silicon oxide (SiO₂): from 0 to 3% by weight, preferably from 1 to 3% by weight
• vanadium oxide (V₂O₅) : < 1% by weight, preferably < 0.5% by weight
• sodium oxide (Na₂O) : from 0 to 5% by weight, preferably from 2 to 5% by weight
• sodium monochromate (Na₂CrO₄): from 0.3 to 4.7% by weight

6. Process according to any of Claims 1 to 5, **characterized in that** at least 90% of the particles - of the oxidic solid are smaller than 500 µm, particularly preferably smaller than 300 µm.

7. Process according to any of Claims 1 to 6, **characterized in that** the atmosphere in step a) containing less than 0.1% by volume, preferably less than 0.01% by volume, of an oxidizing gas is selected from the group consisting of an inert gas atmosphere and vacuum.

8. Process according to Claim 7, **characterized in that** the atmosphere in step a) containing less than 0.1% by volume, preferably less than 0.01% by volume, of an oxidizing gas is an inert gas atmosphere and comprises at least 90% by volume, preferably at least 95% by volume, particularly preferably at least 99% by volume, very particularly preferably at least 99.9% by volume, of one or more gases selected from noble gases, in particular from helium and argon, nitrogen and carbon dioxide, preferably selected from the group consisting of nitrogen and carbon dioxide, very particularly preferably nitrogen.

9. Process according to Claim 7, **characterized in that** the atmosphere in step a) containing less than 0.1% by volume, preferably less than 0.01% by volume, of an oxidizing gas is vacuum, preferably an atmosphere having a pressure of less than 800 mbar, particularly preferably less than 650 mbar, very particularly preferably less than 450 mbar.

10. Process according to any of Claims 1 to 9, **characterized in that** the oxidic solid in step a) is heated to a temperature of from 850°C to 1200°C, preferably to a temperature of from 950 °C to 1150°C.

11. Process according to any of Claims 1 to 10, **characterized in that** the heating in step a) is carried out in a continuously operating or discontinuously operating reactor, preferably in a continuously operating reactor.

12. Process according to Claim 11, **characterized in that** the reactor is a reactor which is indirectly heated by means of gas or electricity, preferably an indirectly electrically heated reactor.

13. Process according to either Claim 11 or 12, **characterized in that** the reactor is an indirectly electrically heated horizontal tube furnace, preferably a two-zone rotary tube furnace.

14. Process according to any of Claims 1 to 13, **characterized in that** the reaction product obtained after step a) is cooled to a temperature below 40°C, particularly preferably below 30°C, in step b).

15. Process according to any of Claims 1 to 14, **characterized in that** the reaction product obtained after step a) remains in the reactor in step b) and the reactor is cooled by means of inert gas after the indirect heating has been switched off.

## Revendications

1. Procédé de réduction du chrome hexavalent dans des solides oxydiques, contenant les étapes suivantes :
a) le chauffage du solide oxydique, contenant Cr(VI), dans une atmosphère contenant moins de 0,1 % en volume d'un gaz oxydant à une température de 600 à 1 400 °C, et
b) le refroidissement du produit de réaction obtenu selon l'étape a) dans une atmosphère contenant moins de 0,1 % en volume d'un gaz oxydant à une température inférieure à 100 °C,
**caractérisé en ce qu'**aucun réducteur n'est ajouté au solide oxydique et à l'atmosphère aux étapes a) et b) dans le procédé.

2. Procédé selon la revendication 1, **caractérisé en ce que** le solide oxydique utilisé est un résidu de minerai de chrome.

3. Procédé selon l'une quelconque des revendications 1 ou 2, **caractérisé en ce que** le solide oxydique utilisé comprend jusqu'à 80 000 ppm, de préférence jusqu'à 50 000 ppm, de manière particulièrement préférée 1 000 à 15 000 ppm de Cr(VI).

4. Procédé selon l'une quelconque des revendications 1 à 3, **caractérisé en ce que** le Cr(VI) dans le solide oxydique se présente sous la forme de monochromate de sodium (Na₂CrO₄).

5. Procédé selon l'une quelconque des revendications 1 à 4, **caractérisé en ce que** le solide oxydique présente la composition suivante :
- oxyde de chrome (III) (Cr₂O₃) : 7 à 13 % en poids, de préférence 7,5 à 12,5 % en poids,
- oxyde d'aluminium (Al₂O₃) : 10 à 30 % en poids, de préférence 18 à 24 % en poids,
- oxyde de fer (III) (Fe₂O₃) : 42 à 50 % en poids, de préférence 42 à 48 % en poids,
- oxyde de magnésium (MgO) : 9 à 18 % en poids, de préférence 10 à 17 % en poids,
- oxyde de calcium (CaO) : < 10 % en poids, de préférence < 5 % en poids,
- oxyde de silicium (SiO₂) : 0 à 3 % en poids, de préférence 1 à 3 % en poids,
- oxyde de vanadium (V₂O₅) : < 1 % en poids, de préférence < 0,5 % en poids,
- oxyde de sodium (Na₂O) : 0 à 5 % en poids, de préférence 2 à 5 % en poids,
- monochromate de sodium (Na₂CrO₄) : 0,3 à 4,7 % en poids.

6. Procédé selon l'une quelconque des revendications 1 à 5, **caractérisé en ce qu'**au moins 90 % des particules du solide oxydique sont inférieures à 500 µm, de manière particulièrement préférée inférieures à 300 µm.

7. Procédé selon l'une quelconque des revendications 1 à 6, **caractérisé en ce que** l'atmosphère à l'étape a) contenant moins de 0,1 % en volume, de préférence moins de 0,01 % en volume, d'un gaz oxydant est choisie dans le groupe constitué par une atmosphère de gaz inerte et un vide.

8. Procédé selon la revendication 7, **caractérisé en ce que** l'atmosphère à l'étape a) contenant moins de 0,1 % en volume, de préférence moins de 0,01 % en volume, d'un gaz oxydant, est une atmosphère de gaz inerte, et est constituée par au moins 90 % en volume, de préférence au moins 95 % en volume, de manière particulièrement préférée au moins 99 % en volume, de manière tout particulièrement préférée au moins 99,9 % en volume, d'un ou de plusieurs gaz choisis dans le groupe constitué par les gaz nobles, notamment l'hélium et l'argon, l'azote et le dioxyde de carbone, de préférence choisis dans le groupe constitué par l'azote et le dioxyde de carbone, de manière tout particulièrement préférée l'azote.

9. Procédé selon la revendication 7, **caractérisé en ce que** l'atmosphère à l'étape a) contenant moins de 0,1 % en volume, de préférence moins de 0,01 % en volume, d'un gaz oxydant, est un vide, de préférence une atmosphère ayant une pression inférieure à 800 mbar, de manière particulièrement préférée inférieure à 650 mbar, de manière tout particulièrement préférée inférieure à 450 mbar.

10. Procédé selon l'une quelconque des revendications 1 à 9, **caractérisé en ce que** le solide oxydique à l'étape a) est porté à une température de 850 °C à 1 200 °C, de préférence à une température de 950 °C à 1 150 °C.

11. Procédé selon l'une quelconque des revendications 1 à 10, **caractérisé en ce que** le chauffage à l'étape a) a lieu dans un réacteur fonctionnant de manière continue ou fonctionnant de manière discontinue, de préférence dans un réacteur fonctionnant de manière continue.

12. Procédé selon la revendication 11, **caractérisé en ce que** le réacteur est un réacteur à chauffage indirect avec un gaz ou électrique, de préférence un réacteur à chauffage indirect électrique.

13. Procédé selon l'une quelconque des revendications 11 ou 12, **caractérisé en ce que** le réacteur est un four tubulaire horizontal à chauffage indirect électrique, de préférence un four tubulaire rotatif à deux zones.

14. Procédé selon l'une quelconque des revendications 1 à 13, **caractérisé en ce que** le produit de réaction obtenu selon l'étape a) est refroidi à l'étape b) à une température inférieure à 40 °C, de manière particulièrement préférée inférieure à 30 °C.

15. Procédé selon l'une quelconque des revendications 1 à 14, **caractérisé en ce que** le produit de réaction obtenu selon l'étape a) reste dans le réacteur à l'étape b) et le réacteur est refroidi avec un gaz inerte après l'arrêt du chauffage indirect.
